# EUROPÄISCHE PATENTSCHRIFT

(11) **EP 1 325 683 B1**
(45) Veröffentlichungstag und Bekanntmachung des Hinweises auf die Patenterteilung: **06.07.2005**
(21) Anmeldenummer: 02027729.9
(22) Anmeldetag: 11.12.2002
(51) Int. Cl.: A24D 3/02, A24C 5/34

(54) **Verfahren und Vorrichtung zur Herstellung eines Faserstranges der Tabakverarbeitenden Industrie**
Method and apparatus for producing a stream of fibers for the tobacco industry
Procédé et dispositif pour la production d'un courant de fibres dans l'industrie du tabac

(30) Priorität: 07.01.2002 DE 10200320
(43) Veröffentlichungstag der Anmeldung: 09.07.2003
(73) Patentinhaber: Hauni Maschinenbau AG, 21033 Hamburg (DE)
(72) Erfinder: Lorenzen, Heinz-Christen, 21465 Wentorf (DE); Schröder, Dierk, Dr., 22399 Hamburg (DE)
(74) Vertreter: Eisenführ, Speiser & Partner

(56) Entgegenhaltungen:
- EP-A- 0 791 823
- US-A- 3 979 581
- US-A- 4 724 429
- US-A- 4 848 370
- US-A- 5 060 664
- US-A- 5 125 418
- US-A1- 2001 000 946

## Beschreibung

Die Erfindung betrifft eine Verfahren zur Herstellung eines Faserstranges der tabakverarbeitenden Industrie aus mindestens drei Komponenten aufweisendem Fasermaterial durch Zusammenfassen des Fasermaterials zu dem Faserstrang. Weiterhin betrifft die Erfindung eine Vorrichtung zur Herstellung eines Faserstranges der tabakverarbeitenden Industrie aus mindestens drei Komponenten aufweisendem Fasermaterial, mit einem Trichter zum Zusammenfassen des Fasermaterials zu dem Faserstrang.

Derartige Verfahren und Vorrichtungen sind aus dem Stand der Technik bekannt. So zeigt zum Beispiel die DE 33 12 841 A1 der Anmelderin ein Verfahren und eine Vorrichtung der eingangs genannten Art, bei dem ein Füllermaterial aus mindestens einer festen Hauptkomponente und wenigstens einer flüssigen Zusatzkomponente zu einem Strang geformt wird, der Strang in Stäbe vorgegebener Länge zerschnitten wird und die Stäbe kontinuierlich abgefördert werden, in vorgegebenen Zeitabständen jeweils ein Stab selbsttätig abgezweigt, in das Magnetfeld einer Kernspinresonanz-Messeinrichtung gefördert und dort positioniert und einer Kernspinresonanz-Messung unterworfen und anschließend selbsttätig aus der Messposition entfernt wird. Die gewonnenen Messwerte werden zur Bestimmung und Regelung des Weichmachergehaltes in Filterstäben verwendet, wobei der Wasseranteil als bekannt und konstant vorausgesetzt wird.

Aus der DE 37 38 983 A1 der Anmelderin ist ein Verfahren und eine Vorrichtung der eingangs genannten Art bekannt, bei dem ein bewegter Fasermaterialstrang eine zusätzliche Komponente enthält. Hier wird mit zwei den Einfluss der beiden Strangkomponenten unterschiedlich erfassenden Messeinrichtungen die Strangdichte gemessen, unterschiedliche erste und zweite Strangdichtesignale erzeugt, in einer Auswertanordnung die ersten und zweiten Signale zu einem ein Maß für den Mengenanteil der zusätzlichen Komponente im Strang darstellenden Differenzsignal verarbeitet und zur Steuerung einer den Anteil der zusätzlichen Komponente beeinflussenden Einrichtung verwendet.

Schließlich ist aus der EP 0 791 823 A2 der Anmelderin ein Verfahren und eine Vorrichtung zum Erfassen der Feucht- und/oder Trockenmasse eines Stoffes, zum Beispiel eines Tabakstranges, bekannt, bei dem durch Auswertung der durch die Anwesenheit des Stoffes verursachten Verstimmung eines HF-Resonators, dem Mikrowellen zugeführt werden, und von dem ein hochfrequentes, von dem Stoff beeinflusstes Signal abgenommen wird, dessen Resonanzfrequenz-Verschiebung und dessen Dämpfung gegenüber einem von dem Stoff unbeeinflussten Signal erfasst wird.

Aufgabe der vorliegenden Erfindung ist es, Verfahren und Vorrichtungen der eingangs genannten Art zu verbessern.

Diese Aufgabe wird erfindungsgemaß durch ein Verfahren gemäß Anspruch 1 und eine Vorrichtung gemäß Anspruch 16 gelöst.

Die Erfindung gestattet auf einfache Weise eine zuverlässige und schnelle Bestimmung der Anteile aller Komponenten in einem Filterstrang sowie eine gezielte Beeinflussung mindestens des Anteiles einer der Komponenten. Bisher war es nicht möglich, den Anteil einer einzelnen Komponente eindeutig zu bestimmen.

Vorteilhaft wird der Anteil mit Hilfe von den Faserstrang zumindest teilweise durchdringenden elektromagnetischen Wellen gemessen. Hierbei wird bevorzugt der Anteil mindestens einer Komponente in einem ersten Wellenlängenbereich und der Anteil mindestens einer weiteren Komponente in einem zweiten Wellenlängenbereich gemessen. Dabei kann es sich um Infrarot- und/oder Mikrowellen handeln. Zusätzlich oder alternativ ist es jedoch auch möglich, den Anteil mit Hilfe von Kernspinresonanz festzustellen.

Im Zusammenhang mit der Erfindung kann es sich bei dem Fasermaterial um zur Herstellung von Zigarettenfiltern geeignetes Filtertow handeln. Dieses wird bevorzugt vor dem Zusammenfassen zu dem Faserstrang in einer Reckeinrichtung gereckt. Mit Hilfe der Erfindung kann der Anteil des trockenen Filtertows an dem Faserstrang durch Steuerung der Reckung in Abhängigkeit des festgestellten Anteils geregelt werden. Hierbei wird vorteilhaft die Erkenntnis ausgenutzt, dass bei der Reckung des Filtertows eine dichtemässige Verdünnung des Filtertows erfolgt. Dabei ist das Maß der Verdünnung bestimmend für die Masse des Filtertows in den schließlich hergestellten Filterstäben und kann somit durch Steuerung der Reckung eingestellt werden.

Weiterhin kann es sich bei einer der Komponenten um Wasser oder Feuchtigkeit handeln, deren Anteil an dem Faserstrang durch Klimatisierung, d.h. durch Steuerung der Zufuhr von Feuchtigkeit zu dem Fasermaterial in Abhängigkeit des festgestellten Anteils gemäß der Erfindung regelbar ist.

Schließlich kann es sich bei einer Komponenten auch um zur Filterherstellung geeigneten Weichmacher handeln, der vor dem Zusammenfassen des Fasermaterials zu dem Faserstrang dem Fasermaterial dosiert zugeführt wird. Der Anteil des Weichmachers an dem Faserstrang kann dann durch Steuerung der Dosierung des Weichmachers in Abhängigkeit von dem festgestellten Anteil des Weichmachers gemäß der Erfindung geregelt werden.

Bei einer vorteilhaften Ausführungsform der erfindungsgemäßen Vorrichtung weist die Messeinrichtung einen benachbart zu einer Bewegungsbahn des Faserstranges angeordneten Sender zum Erzeugen von elektromagnetischen Wellen, einen Empfänger zum Empfangen der Wellen und eine Auswertanordnung zum Auswerten der empfangenen Wellen in Abhängigkeit der erzeugten Wellen und zum Bilden von den Anteilen der drei Komponenten entsprechender Signale und zum Abgeben der Signale an die Regeleinrichtung auf. Dabei weist die Regeleinrichtung bevorzugt eine Vergleichseinrichtung zum Vergleichen der von der Auswertanordnung empfangenen Signale mit in einem Speicher gespeicherten Signalen, welche gewünschten Anteilen der Komponenten in dem Faserstrang entsprechen, auf, und eine Steuersignaleinrichtung zum Erzeugen eines Steuersignals in Abhängigkeit von einer von der Vergleichseinrichtung festgestellten Abweichung der empfangenen Signale von den gespeicherten Signalen und zum Abgeben des Steuersignals an mindestens ein Steuermittel zum Empfangen des Steuersignals und zum Beeinflussen des Anteils einer der drei Komponenten im Sinne einer Regelung dieses Anteils in dem Faserstrang auf.

Weiter bevorzugt ist eine Vorreckeinrichtung zum Entkrimpen des Filtertows vor Erreichen der Reckeinrichtung vorgesehen. Auf diese Weise wird vorteilhaft sichergestellt, dass das Filtertow bei Erreichen der Reckeinrichtung krimpfrei ist, so dass eine definierte Reckung und somit eine genau definierte Bestimmung der Masse des trockenen Filtertows in den fertigen Filterstäben mit Hilfe der erfindungsgemäßen Regelung der Reckung möglich ist.

Eine weitere bevorzugte Ausführungsform der erfindungsgemäßen Vorrichtung weist weiterhin eine Klimatisierungseinrichtung entlang der Bewegungsbahn des Fasermaterials zum Klimatisieren des Fasermaterials auf, wobei die Klimatisierungseinrichtung den Anteil einer Wasserkomponente an dem Fasermaterial durch Klimatisierung des Fasermaterials in Abhängigkeit des von der Regeleinrichtung empfangenen Steuersignals steuert Dabei ist es bevorzugt, wenn die Klimatisierungseinrichtung eine Klimakammer aufweist, in die in steuerbarer Menge zur Klimatisierung des Filtermaterials in Abhängigkeit des empfangenen Steuersignals feuchte und/oder trockene Luft einblasbar ist.

Weitere bevorzugte Ausführungsformen sind in den Unteransprüchen angegeben.

Im Folgenden wird eine vorteilhafte Ausführungsform der Erfindung mit Bezug auf die beiliegende Zeichnung beschrieben Die Zeichnung zeigt:

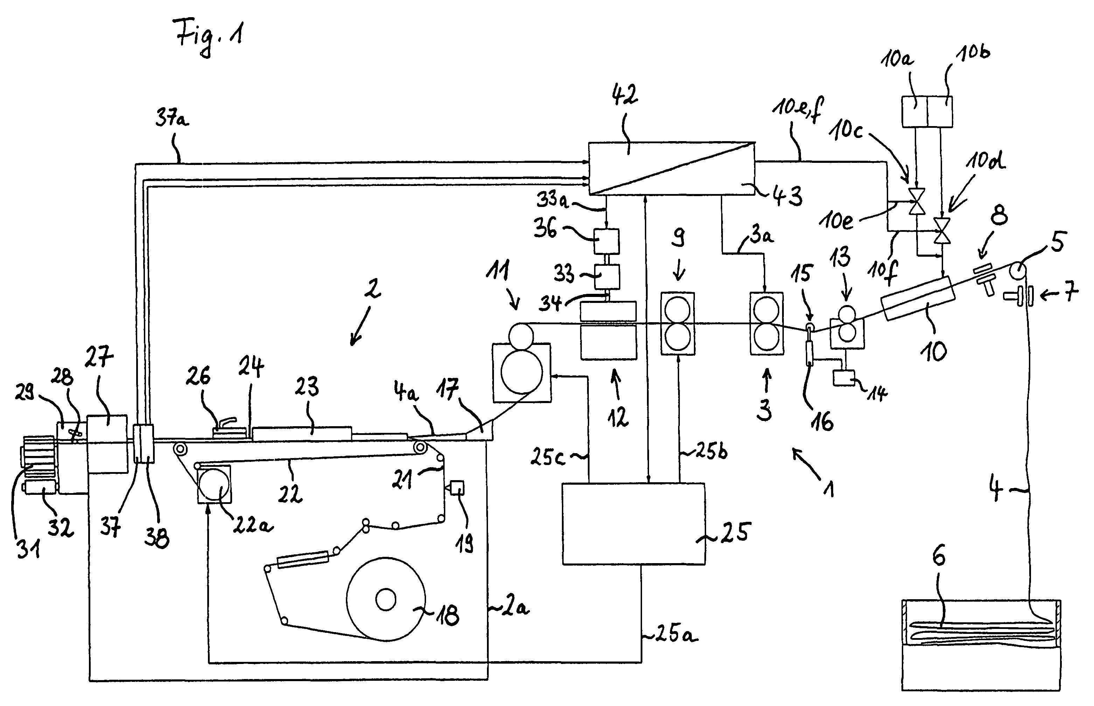

- Fig. 1: schematisch eine Seitenansicht einer Ausführungsform einer erfindungsgemäßen Vorrichtung zum Herstellen eines Filterstrangs; und
- Fig 2: einen prinzipiellen Verlauf des Realteils der Dielektrizitätskonstanten einer Substanz in Abhängigkeit von der Frequenz.

Die Zeichnung zeigt schematisch eine Seitenansicht einer Ausführungsform einer erfindungsgemäßen Vorrichtung zum Herstellen eines Filterstrangs 24, zum Beispiel für die Herstellung von Filterstäben 28 für Zigaretten und dergleichen rauchbarer Artikel. Bei der dargestellten Vorrichtung zur Herstellung von Filterstäben 28 kann es sich beispielsweise um ein Modell der von der Anmelderin vertriebenen Produktlinie KDF handeln. Die Vorrichtung besteht aus zwei Hauptbaugruppen, einem Aufbereitungsgerät 1 für in einem endlosen Filtermaterialstreifen 4 zugeführtes Filtertow und einem Bearbeitungsgerät 2 zur Herstellung von umhüllten Filterstäben 28.

Das Aufbereitungsgerät 1 weist ein Walzenpaar 3 zum fortlaufenden Abziehen eines endlosen Filtermaterialstreifens 4 von einem Ballen 6 auf. Nach der Entnahme vom Ballen 6 passiert der Filtertowstreifen 4 auf seinem Weg zum Walzenpaar 3, auf dem er über eine Umlenkrolle 5 geführt ist, zwei Luftdüsen 7 und 8, die zur Ausbreitung und Auflockerung des Gewebes des Filtermaterialstreifens 4 dienen.

In Bewegungsrichtung des Filtermaterialstreifens 4 nach der Luftdüse 8 und vor dem Walzenpaar 3 befindet sich eine als Klimatisierungseinrichtung für den Filtermaterialstreifen 4 dienende Klimakammer 10 durch die der Filtermaterial-Streifen 4 hindurchgeführt wird. In der Klimakammer 10 wird der Filtermaterial-Streifen 4 mit Wasserdampf aus einer Wasserdampfquelle 10a oder mit trockener Warmluft aus einer Warmluftquelle 10b beaufschlagt. Zur Regelung der Feuchte des Filtermaterialstreifens 4 lässt sich die Luftfeuchtigkeit in der Klimakammer 10 regeln, indem sich die Zufuhr des Wasserdampfes mittels eines von einer Regeleinrichtung 43 gemäß Pfeil 10e steuerbaren Regelventils 10c steuern lässt, während sich die Zufuhr der trockenen Warmluft mittels eines von einer Regeleinrichtung 43 gemäß Pfeil 10f steuerbaren Regelventils 10d steuern lässt Die Funktionsweise der Regeleinrichtung 43 wird weiter unten beschrieben.

Nach der Klimakammer 10 ist ein mit einem von einer Steuerung 14 steuerbaren Antrieb versehenes Vorreckwalzenpaar 13 zur Vorreckung des Filtermaterialstreifens 4 angeordnet. Diese Vorreckung des Filtermaterials-Streifens 4 zur Beseitigung des sogenannten Restkrimp in dem Filtermaterialstreifen 4 geschieht durch Auslenkung des Filtermaterialstreifens 4 aus seiner Bewegungsbahn durch eine Tänzerwalze 15. Die Tänzerwalze 15 wird über ein von der Steuerung 14 steuerbares Stellglied 16 mit einer definierten Kraft beaufschlagt, so dass die Zugspannung in dem Filtermaterialstreifen 4 zwischen den Vorreckwalzen 13 und dem Walzenpaar 3 einen gewünschten vorgegebenen Wert annimmt. Hierdurch wird der Restkrimp in dem Filtermaterialstreifen 4 glattgezogen. Dabei ergibt sich eine variable Verlängerung des Filtermaterialstreifens 4, wodurch sich die Lage der Tänzerwalze 15 ändert. Die Lage der Tänzerwalze 15 wird über das Stellglied 16 von der Steuerung 14 gemessen und durch Steuerung der Fördergeschwindigkeit der Vorreckwalzen 13 auf einen konstanten Wert geregelt. Ein entsprechendes Verfahren zur Regelung der Zugspannung eines Papierstreifens ist in der DE 101 52 162 6 der Anmelderin beschrieben.

Dem Walzenpaar 3 folgen zwei weitere Walzenpaare 9 und 11. Alle Walzenpaare 3, 9 und 11 werden einzeln angetrieben. Die Drehzahl des Walzenpaares 9 entspricht im wesentlichen der Fördergeschwindigkeit in dem Bearbeitungsgerät 2. Die Drehzahl des Walzenpaares 3 ist kleiner als diejenige des Walzenpaares 9, so dass die Walzenpaare 3 und 9 eine Reckeinrichtung für den Filtermaterialstreifen 4 bilden. Das Geschwindigkeits-Verhältnis zwischen den Walzenpaaren 3 und 9 gibt den Grad der Reckung des Filtermatenalstreifens 4 vor. Durch die Reckung wird die Menge des Filtertows pro fertigem Filterstab 28 bestimmt. Die Reckung bewirkt eine Verlängerung des Filtermaterialstreifens 4 und somit eine dichtemäßige Verdünnung des Filtermaterialstreifens 4. Das Maß der Verdünnung bestimmt somit letztendlich die Masse des Filtertows in den fertigen Filterstäben 8 und kann daher durch Steuerung des Fördergeschwindigkeit des ersten Walzenpaares 3 eingestellt werden. Die Drehzahl des Walzenpaares 3 ist hierfür veränderbar. Die Drehzahl des Walzenpaares 3 lässt sich gemäß Pfeil 3a von einer Regeleinrichtung 43 steuern. Die Funktionsweise der Regeleinrichtung 43 wird weiter unten beschrieben

Zwischen den Walzenpaaren 3 und 9 befindet sich eine Auftragseinrichtung 12 zum Aufbringen eines Weichmachers, zum Beispiel Triacetin, auf den zwischen den Walzenpaaren 9 und 11 ausgebreitet geführten Filtermaterialstreifen 4. In der Auftragseinrichtung 12 wird auf den ausgebreiteten und gereckten Filtermaterialstreifen 4 in einer vorgegebenen Dosierung der flüssige Weichmacher aufgebracht. Die Zufuhr des Weichmachers zu der Auftragseinrichtung 12 erfolgt mittels einer Dosierpumpe 33 über eine Zuführleitung 34 aus einem Weichmachervorrat 36. Die Dosierpumpe 33 lässt sich gemäß Pfeil 33a von einer Regeleinrichtung 43 steuern. Die Funktionsweise der Regeleinrichtung 43 wird weiter unten beschrieben.

Der aufbereitete, mit Weichmacher besprühte Filtermaterialstreifen 4 gelangt über das Walzenpaar 11 von dem Aufbereitungsgerät 1 in einen Einlauftrichter 17 des ein Gehäuse 2a aufweisenden Bearbeitungsgerätes 2, in welchem er zusammengefasst und auf einen von einer Bobine 18 abgezogenen und mittels einer eine Leimdüse aufweisenden Beleimvorrichtung 19 mit Leim versehenen Umhüllungsstreifen 21 aufgelegt wird. Der Umhüllungsstreifen 21 und ein durch Zusammenfassen des Filtermaterialstreifens 4 gebildeter Filtermaterialstrang 4a gelangen auf ein Formatband 22, das beide Komponenten durch ein Format 23 führt, das den Umhüllungsstreifen 21 um den Filtermaterialstrang 4a herumlegt und dabei einen endlosen Filterstrang 24 bildet. Die Geschwindigkeit des Formatbandes 22 wird von einer Hauptsteuerung 25 gemäß Pfeil 25a gesteuert und auf die ebenfalls von der Hauptsteuerung 25 durch Steuerung der Antriebe der Walzenpaare 9 und 11 gemäß den Pfeilen 25b und 25c bestimmte Fördergeschwindigkeit des gereckten Filtertows 4 abgestimmt.

Der Filterstrang 24 durchläuft eine Nahtplätte 26, in welcher die Klebnaht abgetrocknet wird. Anschließend werden von dem Filterstrang 24 mittels eines Messerapparates 27 fortlaufend Filterstäbe 28 abgeschnitten, die von einem Beschleuniger 29 in eine Ablegertrommel 31 überführt werden, in der sie in queraxialer Förderrichtung gefördert werden. Von der Ablegertrommel 31 gelangen die Filterstäbe 28 zu einem Ablegerband 32, von dem aus sie einer Weiterverarbeitung oder einer Zwischenlagerung zugeführt werden.

Stromab der Nahtplätte 26 und stromauf des Messerapparates 27 sind eine erste und eine zweite Messeinrichtung 37 bzw. 38, welche die Anteile der Komponenten des Stranges 24, nämlich trockenes Filtertow, Weichmacher und Wasser getrennt voneinander erfassen.

Die zweite Messeinrichtung 38 umfasst ein Mikrowellenmesssystem mit einem Messkopf mit einer Mikrowellenquelle und einem Mikrowellendetektor, welcher die von der Mikrowellenquelle ausgehenden, den Filterstrang 24 durchdringenden Mikrowellen zur Erzeugung und Abgabe zweier Messwerte 38a und 38b an die Auswertanordnung 42 erfasst. Die Messwerte 38a und 38b ermöglichen z.B. eine Aussage über den Wasseranteil und den gemeinsamen Anteil der chemisch ähnlichen Komponenten Weichmacher und Filtertow im Strang 24. Ein geeignetes Messverfahren und eine entsprechende Vorrichtung sind z.B. der EP 0 791 823 A2 der Anmelderin zu entnehmen.

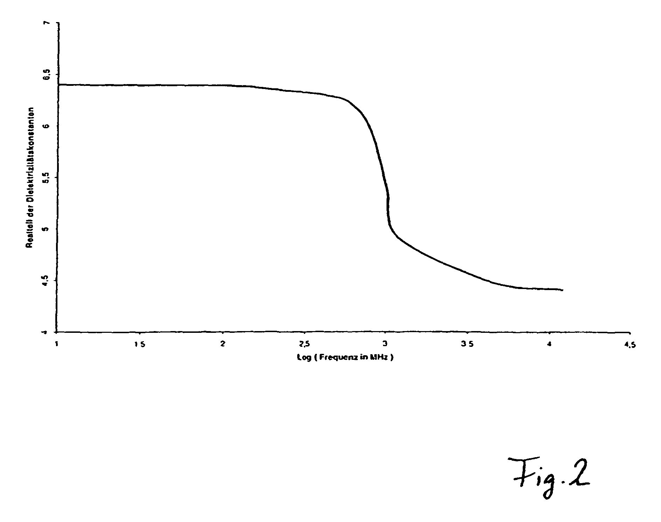

Figur 2 zeigt einen Verlauf des Realteils der Dielektrizitätskonstanten einer Substanz in Abhängigkeit von der Frequenz. Man erkennt eine stufenförmige Abnahme des Realteils der Dielektrizitätskonstanten mit zunehmender Frequenz. Die Ursache hierfür sind Relaxationsvorgänge in der Messsubstanz. Bei höheren Frequenzen schaffen es die Moleküle nicht mehr, dem angelegten äußeren elektrischen Feld in ihrer Ausrichtung zu folgen. Position und Höhe der Stufe sind abhängig von der Messsubstanz. Ähnliches gilt für den Imaginärteil der Dielektrizitätskonstanten Der Verlauf der Dielektrizitätskonstanten einer Substanz in Abhängigkeit von der Frequenz weist in der Regel mehrere solcher Stufen in verschiedenen Frequenzbereichen und mit unterschiedlicher Höhe auf, von denen jedoch nur eine dargestellt ist.

Die stufenförmige Abnahme der Dielektrizitätskonstanten macht sich die Erfindung zunutze, indem zusätzlich zur Messeinrichtung 38 eine weitere Messeinrichtung 37 vorgesehen ist, mittels der eine Messung mit elektromagnetischen Wellen einer zu den in der Messeinrichtung 38 verwendeten Wellen deutlich unterschiedlichen Frequenz durchgeführt wird. Da sich die Verläufe der Dielektrizitätskonstanten unterschiedlicher Substanzen besonders in Frequenz und Höhe der oben beschriebenen Relaxationsstufen unterscheiden, können mit Hilfe des so gewonnenen dritten Messwertes 37a und den Messwerten 38a und 38b die Anteile der drei Komponenten des Filterstranges 24 eindeutig und unabhängig voneinander bestimmt werden.

Die Messfrequenz der Messeinrichtung 37 kann im Bereich der Radio- oder Mikrowellen oder im optischen, z.B. im infraroten Bereich liegen.

Bei der Verwendung von Wellenlängen im Infrarotbereich umfasst die erste Messeinrichtung 37 einen optischen Messkopf mit einer Infrarotstrahlungsquelle und einem Infrarotdetektor, welcher die von der Infrarotstrahlungsquelle ausgehenden, den Filterstrang 24 durchdringenden Infrarotwellen erfasst. Die Intensität des den Strang 24 durchdringenden Infrarotlichts wird von einem Weichmacheranteil im Strang 24 nicht beeinflusst, so dass der Infrarotdetektor über eine Verstärker an eine Auswertanordnung 42 ein Messsignal 37a abgibt, das nur dem Mengenanteil des trockenen Filtertowmaterials im Filterstrang 24 entspricht. Anstelle des Infrarotmesskopfes kann - wie oben angedeutet - ein Messkopf eingesetzt werden, der mit Mikrowellen arbeitet Dabei kann es sich um einen Hohlraumresonator, der mit nur einer Frequenz beaufschlagt wird, handeln. Im übrigen kann jedoch der gleiche Aufbau gemäß der EP 0 791 823 12 verwendet werden. Eine Messung im Bereich der Radiowellen kann z.B. eine Kernspinresonanzmessung sein, bei der die magnetischen Momente der Atomkerne der zu messenden Substanz durch ein äußeres Magnetfeld ausgerichtet und dann mittels Radiowellen in einen energetisch höheren Zustand angeregt werden, in welchem sie im wesentlichen parallel zum äußeren Magnetfeld orientiert sind. Eine mögliche Ausgestaltung einer solchen Messeinrichtung kann z.B. der DE 33 12 841 A1 der Anmelderin entnommen werden.

Indem mit den Messeinrichtungen 37 und 38 insgesamt drei getrennte Messwerte 37a, 38a, 38b erfasst werden, können die drei Filterstrangkomponenten trockenes Filtertow, Weichmacher und Wasser unabhängig voneinander bestimmt werden. Gemäß der Zeichnung sind beide Messeinrichtungen 37 und 38 stromauf vor dem Messerapparat 27 angeordnet. Es kann auch wenigstens eine der Messeinrichtungen 37 bzw. 38 stromab hinter der Schneideinrichtung 27 angeordnet werden, wobei dann die vom Strang 24 abgetrennten Filterstäbe 28 gemessen werden, wie es in der DE 33 12 841 A1 beschrieben ist. Die Auswertung der so gewonnenen Signale bleibt dadurch unberührt. Für Details des Aufbaus und der Funktion der Messeinrichtung 37 und der Auswertanordnung 42 sei auf die DE 101 17 081 der Anmelderin verwiesen und für Details des Aufbaus und der Funktion der Messeinrichtung 38 und der Auswertanordnung 42 sei auf die EP 0 791 823 A2 der Anmelderin verwiesen.

Der Auswertanordnung 42 ist eine Regeleinrichtung 43 nachgeschaltet. In der Regeleinrichtung 43 werden mittels einer integrierten Vergleichseinrichtung die Signale der Auswertanordnung 42 über die Anteile der Komponenten trockenes Filtertow, Wasser, Weichmacher als Istwert mit vorgegebenen, gespeicherten Sollwerten verglichen. Bei einer Abweichung von einem Sollwert gibt die Regeleinrichtung 43 ein Steuersignal an ein zugeordnetes Steuermittel ab.

Als Steuermittel ist vorgesehen die Dosierpumpe 33, die von der Regeleinrichtung 43 gemäß Pfeil 33a im Sinne der Aufbringung einer vorgegebenen Menge von Weichmacher auf den Filtermaterialstreifen 4 beeinflusst wird. Stellt die Vergleichseinrichtung fest, dass der von der Auswertanordnung 42 erhaltene Istwert des Weichmacheranteils in dem Filterstrang 24 im Vergleich zu dem gespeicherten Wert zu niedrig ist, so steuert die Regeleinrichtung 43 die Dosierpumpe 33 so, dass diese mehr Weichmacher abgibt. Stellt die Vergleichseinrichtung hingegen fest, dass der von der Auswertanordnung 42 erhaltene Istwert des Weichmacheranteils in dem Filterstrang 24 im Vergleich zu dem gespeicherten Wert zu hoch ist, so steuert die Regeleinrichtung 43 die Dosierpumpe 33 so, dass diese weniger Weichmacher abgibt.

Als Steuermittel ist weiter vorgesehen das Walzenpaar 3, das von der Regeleinrichtung 43 gemäß Pfeil 3a im Sinne der Einbringung einer vorgegebenen Menge von Filtertow 4 in den Filterstrang 24 beeinflusst wird. Stellt die Vergleichseinrichtung fest, dass der von der Auswertanordnung 42 erhaltene Istwert des Anteils des trockenen Filtertow 4 in dem Filterstrang 24 im Vergleich zu dem gespeicherten Wert zu niedrig ist, so erhöht die Regeleinrichtung 43 gemäß Pfeil 3a über den Antrieb die Fördergeschwindigkeit des Walzenpaares 3 so, dass dieses den Filtermatenalstreifen 4 weniger stark reckt, so dass mehr Filtertow 4 in den Filterstrang 24 gelangt. Stellt die Vergleichseinrichtung hingegen fest, dass der von der Auswertanordnung 42 erhaltene Istwert des Filtertowanteils in dem Filterstrang 24 im Vergleich zu dem gespeicherten Wert zu hoch ist, so senkt die Regeleinrichtung 43 gemäß Pfeil 3a über den Antrieb die Fördergeschwindigkeit des Walzenpaares 3 so, dass dieses den Filtermaterialstreifen 4 stärker reckt, so dass weniger Filtertow 4 in den Filterstrang 24 gelangt.

Schließlich ist als drittes Steuermittel vorgesehen die Klimakammer 10, die von der Regeleinrichtung 43 gemäß der Pfeile 10e und 10f im Sinne der Erhaltung einer vorgegebenen Feuchte des Filtertow 4 in dem Filterstrang 24 beeinflusst wird. Stellt die Vergleichseinrichtung fest, dass der von der Auswertanordnung 42 erhaltene Istwert des Anteils der Feuchte in dem Filterstrang 24 im Vergleich zu dem gespeicherten Wert zu niedrig ist, so verstärkt die Regeleinrichtung 43 gemäß Pfeil 10e über das Regelventil 10c die Zufuhr von Wasserdampf aus der Wasserdampfquelle 10a in die Klimakammer 10 und senkt die Zufuhr von trockener Warmluft aus der Warmluftquelle 10b so, dass die Klimakammer 10 den Filtermaterialstreifen 4 stärker befeuchtet, so dass mehr Feuchtigkeit in den Filterstrang 24 gelangt. Stellt die Vergleichseinrichtung hingegen fest, dass der von der Auswertanordnung 42 erhaltene Istwert der Feuchte in dem Filterstrang 24 im Vergleich zu dem gespeicherten Wert zu hoch ist, so senkt die Regeleinrichtung 43 gemäß Pfeil 10f mittels des Regelventils 10d die Zufuhr von Wasserdampf aus der Wasserdampfquelle 10a in die Klimakammer 10 und erhöht die Zufuhr von trockener Warmluft aus der Warmluftquelle 10b so, dass die Klimakammer 10 den Filtermaterialstreifen 4 trocknet, so dass weniger Feuchtigkeit in den Filterstrang 24 gelangt.

Die Anteile von trockenem Filtertow, Wasser und Weichmacher in dem Filterstrang können unabhangig voneinander geregelt werden. Es ist auch nicht erforderlich, alle drei vorgenannten Anteile zu regeln. Auch die Regelung nur von einem oder zweien der Anteile in Abhängigkeit aller drei Anteile ist möglich und sinnvoll, wenn zum Beispiel zwei oder einer der Anteile sich als unkritisch oder als im wesentlichen konstant herausstellt.

## Patentansprüche

1. Verfahren zur Herstellung eines Faserstranges (24) der tabakverarbeitenden Industrie aus mindestens drei Komponenten aufweisendem Fasermaterial (4), bei dem das Fasermaterial (4) zu dem Faserstrang (24) zusammengefasst wird,
**dadurch gekennzeichnet, dass** die Anteile der drei Komponenten an dem Faserstrang (24) festgestellt werden

2. Verfahren nach Anspruch 1,
wobei die Anteile der drei Komponenten an dem Faserstrang (24) zum Regeln des Anteils mindestens einer Komponente festgestellt werden.

3. Verfahren nach einem der vorstehenden Ansprüche,
wobei mindestens einer der Anteile im wesentlichen unbeeinflusst von den Anteilen der anderen Komponenten festgestellt wird.

4. Verfahren nach einem der vorstehenden Ansprüche,
wobei mindestens ein Anteil mit Hilfe von den Faserstrang (24) zumindest teilweise durchdringender elektromagnetischer Wellen gemessen wird.

5. Verfahren nach einem der vorstehenden Ansprüche,
wobei mindestens ein Anteil im wesentlichen in einem ersten Wellenlängenbereich gemessen wird, und mindestens ein weiterer Anteil im wesentlichen in einem zweiten Wellenlängenbereich gemessen wird.

6. Verfahren nach einem der beiden vorstehenden Ansprüche,
wobei es sich bei den elektromagnetischen Wellen oder den Wellenlängenbereichen um Infrarot- und/oder Mikrowellen handelt.

7. Verfahren nach dem vorstehenden Anspruch,
wobei mindestens der Anteil einer Komponente mittels der Infrarotwellen gemessen wird, und mindestens die Anteile zweier Komponenten mittels Mikrowellen gemessen werden.

8. Verfahren nach Anspruch 6,
wobei die Anteile aller Komponenten mittels Mikrowellen gemessen werden.

9. Verfahren nach einem der vorstehenden Ansprüche,
wobei mindestens ein Anteil mit Hilfe von Kernspinresonanz gemessen wird.

10. Verfahren nach einem der vorstehenden Ansprüche,
wobei eine der Komponenten zur Filterherstellung geeignetes trockenes Filtertow (4) ist, welches vor dem Zusammenfassen zu dem Faserstrang (24) gereckt wird, und dessen Anteil an dem Faserstrang (24) durch Steuerung der Reckung in Abhängigkeit des festgestellten Anteils geregelt wird.

11. Verfahren nach einem der vorstehenden Ansprüche,
wobei eine der Komponenten Wasser ist, dessen Anteil an dem Faserstrang (24) durch Klimatisierung des Fasermaterials (4) in Abhängigkeit des festgestellten Anteils geregelt wird.

12. Verfahren nach Anspruch 11,
wobei das Fasermaterial (4) zur Klimatisierung in Abhängigkeit des festgestellten Wasseranteils durch feuchte oder trockene Luft hindurchgeführt wird.

13. Verfahren nach Anspruch 12,
wobei die feuchte Luft durch Wasserdampf und/oder durch einen Wassersprühnebel zur Verfügung gestellt wird.

14. Verfahren nach einem der Ansprüche 11-13,
wobei das Fasermaterial (4) zur Klimatisierung in Abhängigkeit des festgestellten Wasseranteils durch eine Strahlungsheizung geführt wird.

15. Verfahren nach einem der vorstehenden Ansprüche,
wobei eine der Komponenten ein zur Filterherstellung geeigneter Weichmacher ist, der vor dem Zusammenfassen des Fasermaterials (4) zu dem Faserstrang (24) dem Fasermaterial (4) dosiert zugeführt wird, und dessen Anteil an dem Faserstrang (24) durch Steuerung der Dosierung des Weichmachers in Abhängigkeit von dem festgestellten Anteil des Weichmachers geregelt wird.

16. Vorrichtung zur Herstellung eines Faserstranges (24) der tabakverarbeitenden Industrie aus mindestens drei Komponenten aufweisendem Fasermaterial (4),
mit einem Trichter (17) zum Zusammenfassen des Fasermaterials (4) zu einem Faserstrang (4a),
**gekennzeichnet durch** eine Messeinrichtung (37, 38, 42) zum Feststellen der Anteile der drei Komponenten an dem Faserstrang (24).

17. Vorrichtung nach Anspruch 16,
wobei eine Regeleinrichtung (43) zum Regeln des Anteils mindestens einer Komponente in Abhängigkeit des festgestellten Anteils vorgesehen ist.

18. Vorrichtung nach einem der Ansprüche 16 oder 17,
wobei die Messeinrichtung (37, 38, 42) ausgebildet ist, um mindestens einen der Anteile im wesentlichen unbeeinflusst von den Anteilen der anderen Komponenten festzustellen.

19. Vorrichtung nach einem der Ansprüche 17 oder 18,
wobei die Messeinrichtung (37, 38, 42) aufweist:
mindestens einen benachbart zu einer Bewegungsbahn des Faserstranges (24) angeordneten Sender zum Erzeugen elektromagnetischer Wellen, mindestens einen Empfänger zum Empfangen der Wellen,
und eine Auswertanordnung (42) zum Auswerten der empfangenen Wellen in Abhängigkeit der erzeugten Wellen und zum Bilden von den Anteilen der drei Komponenten entsprechender Signale und zum Abgeben der Signale an die Regeleinrichtung (43).

20. Vorrichtung nach Anspruch 19,
wobei die Messeinrichtung (37, 38, 42) aufweist:
einen ersten Sender zum Abstrahlen elektromagnetischer Wellen eines ersten, bevorzugt im Infrarot liegenden, Wellenlängenbereiches,
einen zweiten Sender zum Abstrahlen elektromagnetischer Wellen eines zweiten, bevorzugt im Bereich der Mikrowellen liegenden, Wellenlängenbereiches,
einen ersten Empfänger zum Empfangen elektromagnetischer Wellen des ersten, bevorzugt im Infrarot liegenden, Wellenlängenbereiches, und
einen zweiten Empfänger zum Empfangen elektromagnetischer Wellen des zweiten, bevorzugt im Bereich der Mikrowellen liegenden, Wellenlängenbereiches.

21. Vorrichtung nach einem der Ansprüche 17 - 20,
wobei die Regeleinrichtung (43) aufweist:
eine Vergleichseinrichtung zum Vergleichen des von der Auswertanordnung (42) empfangenen Signals mit einem in einem Speicher gespeicherten Signal, welches einem gewünschten Anteil einer Komponente in dem Faserstrang (24) entspricht, und
eine Steuersignaleinrichtung zum Erzeugen eines Steuersignals (3a, 10e, 10f, 33a) in Abhängigkeit von einer von der Vergleichseinrichtung festgestellten Abweichung des empfangenen Signals (37a, 38a, 38b) von dem gespeicherten Signal und zum Abgeben des Steuersignals (3a, 10e, 10f, 33a) an mindestens ein Steuermittel (3, 10, 12) zum Empfangen des Steuersignals (3a, 10e, 10f, 33a) und zum Beeinflussen des Anteils einer der drei Komponenten im Sinne einer Regelung dieses Anteils in dem Faserstrang (24).

22. Vorrichtung nach Anspruch 21,
wobei eine der Komponenten zur Filterherstellung geeignetes trockenes Filtertow (4) ist, und
wobei das Steuermittel (3, 10, 12) eine Reckeinrichtung (3) zum Recken des Filtertows (4) vor dem Zusammenfassen zu dem Faserstrang (24) umfasst, welche Reckeinrichtung (3) den Anteil des Filtertows (4) in dem Faserstrang (24) durch unterschiedlich starke Reckung des Filtertows (4) in Abhängigkeit des empfangenen Steuersignals (3a) steuert.

23. Vorrichtung nach Anspruch 22,
wobei in Bewegungsrichtung des Filtertows (4) vor der Reckeinrichtung (3) eine Vorreckeinrichtung (13) zum Entkrimpen des Filtertows (4) vorgesehen ist.

24. Vorrichtung nach einem der Ansprüche 21-23;
wobei das Steuermittel (3, 10, 12) eine Klimatisierungseinrichtung (10) entlang der Bewegungsbahn des Fasermaterials (4) zum Klimatisieren des Fasermaterials (4) umfasst, wobei die Klimatisierungseinrichtung den Anteil einer Wasserkomponente an dem Fasermaterial (4) durch Klimatisierung des Fasermaterials (4) in Abhängigkeit des empfangenen Steuersignals (10e, 10f) steuert.

25. Vorrichtung nach Anspruch 24,
wobei die Klimatisierungseinrichtung eine Klimakammer (10) umfasst, durch die die Bewegungsbahn des Fasermaterials (4) führt, wobei in die Klimakammer (10) in steuerbarer Menge zur Klimatisierung des Fasermaterials (4) in Abhängigkeit des empfangenen Steuersignals (10e, 10f) feuchte und/oder trockene Luft einblasbar ist.

26. Vorrichtung nach einem der Ansprüche 24 oder 25,
wobei die Klimatisierungseinrichtung einen Ultraschallvernebler zur Erzeugung eines Wassersprühnebels in der Klimatisierungseinrichtung (10) und/oder eine Strahlungsheizung zum Erwärmen des Fasermaterials (4) aufweist.

27. Vorrichtung nach einem der Ansprüche 21-26,
wobei das Steuermittel (3, 10, 12) eine Auftragseinrichtung (12) zum Auftragen eines zur Filterherstellung geeigneten Weichmachers auf das Fasermaterial (4) aufweist, wobei der Anteil der Weichmacherkomponente in dem Faserstrang (24) durch Steuerung der Dosierung des Weichmachers mit Hilfe der Auftragseinrichtung (12) in Abhängigkeit von dem empfangenen Steuersignal (33a) steuerbar ist.

## Claims

1. A process for producing a fibre strand (24) in the tobacco-processing industry from fibre material (4) having at least three components, in which the fibre material (4) is combined together to form the fibre strand (24), **characterised in that** the proportions of the three components in the fibre strand (24) are detected.

2. A process according to claim 1 wherein the proportions of the three components in the fibre strand (24) are detected for regulating the proportion of at least one component.

3. A process according to one of the preceding claims wherein at least one of the proportions is detected substantially uninfluenced by the proportions of the other components.

4. A process according to one of the preceding claims wherein at least one proportion is measured by means of electromagnetic waves which at least partially pass through the fibre strand (24).

5. A process according to one of the preceding claims wherein at least one proportion is substantially measured in a first wavelength range and at least one further proportion is measured substantially in a second wavelength range.

6. A process according to one of the two preceding claims wherein the electromagnetic waves or the wavelength ranges involve infrared waves and/or microwaves.

7. A process according to the preceding claim wherein at least the proportion of one component is measured by means of the infrared waves and at least the proportions of two components are measured by means of microwaves.

8. A process according to claim 6 wherein the proportions of all components are measured by means of microwaves.

9. A process according to one of the preceding claims wherein at least one proportion is measured by means of nuclear spin resonance.

10. A process according to one of the preceding claims wherein one of the components is dry filter tow (4) which is suitable for filter production and which is stretched prior to the operation of being combined together to form the fibre strand (24) and the proportion of which in the fibre strand (24) is regulated by controlling the stretching action in dependence on the detected proportion.

11. A process according to one of the preceding claims wherein one of the components is water, the proportion of which in the fibre strand (24) is regulated by air-conditioning of the fibre material (4) in dependence on the detected proportion.

12. A process according to claim 11 wherein the fibre material (4) is passed through moist or dry air for the air-conditioning effect in dependence on the detected proportion of water.

13. A process according to claim 12 wherein the moist air is afforded by water vapour and/or by a water spray mist.

14. A process according to one of claims 11 to 13 wherein the fibre material (4) is passed through a radiation heating means for the air-conditioning effect in dependence on the detected proportion of water.

15. A process according to one of the preceding claims wherein one of the components is a plasticiser which is suitable for filter production and which prior to the operation of the fibre material (4) being combined together to form the fibre strand (24) is meteredly fed to the fibre material (4) and the proportion of which in the fibre strand (24) is regulated by control of the metering of the plasticiser in dependence on the detected proportion of the plasticiser.

16. Apparatus for producing a fibre strand (24) in the tobacco-processing industry from fibre material (4) having at least three components,
having a funnel (17) for combining together the fibre material (4) to form a fibre strand (4a),
**characterised by** a measuring device (37, 38, 42) for detecting the proportions of the three components in the fibre strand (24).

17. Apparatus according to claim 16 wherein there is provided a regulating device (43) for regulating the proportion of at least one component in dependence on the detected proportion.

18. Apparatus according to one of claims 16 and 17 wherein the measuring device (37, 38, 42) is adapted to detect at least one of the proportions, substantially uninfluenced by the proportions of the other components.

19. Apparatus according to one of claims 17 and 18 wherein the measuring device (37, 38, 42) comprises:
at least one sender arranged adjacent to a path of movement of the fibre strand (24), for producing electromagnetic waves,
at least one receiver for receiving the waves, and
an evaluation arrangement (42) for evaluation of the received waves in dependence on the waves produced and for forming signals corresponding to the proportions of the three components and for delivering the signals to the regulating device (43).

20. Apparatus according to claim 19 wherein the measuring device (37, 38, 42) comprises:
a first sender for emitting electromagnetic waves of a first wavelength range which is preferably in the infrared,
a second sender for emitting electromagnetic waves of a second wavelength range which is preferably in the range of microwaves,
a first receiver for receiving electromagnetic waves of the first wavelength range which is preferably in the infrared, and
a second receiver for receiving electromagnetic waves of the second wavelength range which is preferably in the range of microwaves.

21. Apparatus according to one of claims 17 to 20 wherein the regulating device (43) comprises:
a comparison device for comparing the signal received by the evaluation arrangement (42) to a signal which is stored in a store and which corresponds to a desired proportion of a component in the fibre strand (24), and
a control signal device for producing a control signal (3a, 10e, 10f, 33a) in dependence on a deviation, detected by the comparison device, of the received signal (37a, 38a, 38b) from the stored signal and for the delivery of the control signal (3a, 10e, 10f, 33a) to at least one control means (3, 10, 12) for receiving the control signal (3a, 10e, 10f, 33a) and for influencing the proportion of one of the three components in the sense of regulating said proportion in the fibre strand (24).

22. Apparatus according to claim 21 wherein one of the components is dry filter tow (4) suitable for filter production, and wherein the control means (3, 10, 12) includes a stretching device (3) for stretching the filter tow (4) before the operation of combining it together to form the fibre strand (24), which stretching device (3) controls the proportion of filter tow (4) in the fibre strand (24) by stretching the filter tow (4) to varying degrees in dependence on the received control signal (3a).

23. Apparatus according to claim 22 wherein a pre-stretching device (13) for de-crimping the filter tow (4) is provided upstream of the stretching device (3) in the direction of movement of the filter tow (4).

24. Apparatus according to one of claims 21 to 23 wherein the control means (3, 10, 12) includes an air conditioning device (10) along the path of movement of the fibre material (4) for air-conditioning of the fibre material (4), wherein the air conditioning device controls the proportion of a water component in the fibre material (4) by air-conditioning of the fibre material (4) in dependence on the received control signal (10e, 10f).

25. Apparatus according to claim 24 wherein the air conditioning device includes a climatic chamber (10) through which the path of movement of the fibre material (4) passes, wherein moist and/or dry air can be blown into the climatic chamber (10) in a controllable amount for air-conditioning of the fibre material (4) in dependence on the received control signal (10e, 10f).

26. Apparatus according to one of claims 24 and 25 wherein the air conditioning device has an ultrasonic atomiser for producing a water spray mist in the air conditioning device (10) and/or a radiant heating means for heating the fibre material (4).

27. Apparatus according to one of claims 21 to 26 wherein the control means (3, 10, 12) has an applicator device (12) for applying to the fibre material (4) a plasticiser which is suitable for filter production, wherein the proportion of the plasticiser component in the fibre strand (24) is controllable by controlling the metering of the plasticiser by means of the applicator device (12) in dependence on the received control signal (33a).

## Revendications

1. Procédé pour la fabrication d'un boudin de fibres (24) de l'industrie du tabac à partir de matériau fibreux (4) comprenant au moins trois composants, dans lequel le matériau fibreux (4) est regroupé pour former un boudin de fibres (24),
**caractérisé en ce que** les proportions des trois composants sont déterminées sur le boudin de fibres (24).

2. Procédé selon la revendication 1,
les proportions des trois composants étant déterminées sur le boudin de fibres (24) pour le réglage de la proportion d'au moins un composant.

3. Procédé selon l'une des revendications précédentes,
au moins l'une des proportions étant déterminée sans être sensiblement influencée par les proportions des autres composants.

4. Procédé selon l'une des revendications précédentes,
au moins une proportion étant mesurée à l'aide d'ondes électromagnétiques traversant, au moins partiellement, le boudin de fibres (24).

5. Procédé selon l'une des revendications précédentes,
au moins une proportion étant mesurée essentiellement dans une première plage de longueurs d'ondes, et au moins une autre proportion étant mesurée essentiellement dans une seconde plage de longueurs d'ondes.

6. Procédé selon l'une des deux revendications précédentes, pour lequel, concernant les ondes électromagnétiques ou les plages de longueurs d'ondes, il s'agit d'ondes infrarouges et/ou de micro-ondes.

7. Procédé selon la revendication précédente,
au moins la proportion d'un composant étant mesurée au moyen des ondes infrarouges, et au moins les proportions de deux composants étant mesurées au moyen de micro-ondes.

8. Procédé selon la revendication 6,
les proportions de tous les composants étant mesurées au moyen de micro-ondes.

9. Procédé selon l'une des revendications précédentes,
au moins une proportion étant mesurée à l'aide de résonance magnétique nucléaire.

10. Procédé selon l'une des revendications précédentes,
l'un des composants étant de la filasse pour filtre (4) sèche, appropriée pour la fabrication de filtres, qui est étirée avant le regroupement pour former le boudin de fibres (24), et dont la proportion est réglée sur le boudin de fibres (24) par commande de l'étirage en fonction de la proportion déterminée.

11. Procédé selon l'une des revendications précédentes,
l'un des composants étant de l'eau, dont la proportion est réglée sur le boudin de fibres (24) par climatisation du matériau fibreux (4) en fonction de la proportion déterminée.

12. Procédé selon la revendication 11,
le matériau fibreux (4) étant traversé par de l'air humide ou sec pour la climatisation en fonction de la proportion d'eau déterminée.

13. Procédé selon la revendication 12,
l'air humide étant mis à disposition par de la vapeur d'eau et/ou par un brouillard de fines gouttelettes d'eau.

14. Procédé selon l'une des revendications 11 à 13,
le matériau fibreux (4) étant dirigé à travers un chauffage à rayonnement pour la climatisation en fonction de la proportion d'eau déterminée.

15. Procédé selon l'une des revendications précédentes,
l'un des composants étant un agent amollissant approprié pour la fabrication de filtres, qui est amené de façon dosée au matériau fibreux (4) avant le regroupement du matériau fibreux (4) pour former le boudin de fibres (24), et dont la proportion est réglée sur le boudin de fibres (24) par commande du dosage de l'agent amollissant en fonction de la proportion déterminée de l'agent amollissant.

16. Dispositif pour la fabrication d'un boudin de fibres (24) de l'industrie du tabac à partir de matériau fibreux (4) présentant au moins trois composants,
comportant un entonnoir (17) pour le regroupement du matériau fibreux (4) en un boudin de fibres (4a),
**caractérisé par** un appareil de mesure (37, 38, 42) pour la détermination des proportions des trois composants sur le boudin de fibres (24).

17. Dispositif selon la revendication 16,
un appareil de réglage (43) étant prévu pour le réglage de la proportion d'au moins un composant en fonction de la proportion déterminée.

18. Dispositif selon l'une des revendications 16 ou 17,
l'appareil de mesure (37, 38, 42) étant conçu pour déterminer au moins l'une des proportions sans être sensiblement influencé par les proportions des autres composants.

19. Dispositif selon l'une des revendications 17 ou 18,
l'appareil de mesure (37,38,42) présentant :
au moins un émetteur, disposé à proximité d'une trajectoire de déplacement du boudin de fibres (24), pour générer des ondes électromagnétiques, au moins un récepteur pour la réception des ondes, et un dispositif d'analyse (42) pour analyser les ondes reçues en fonction des ondes générées et pour fermer des signaux correspondants aux proportions des trois composants et délivrer les signaux à l'appareil de réglage (43).

20. Dispositif selon la revendication 19,
l'appareil de mesure (37, 38, 42) présentant :
un premier émetteur pour l'émission d'ondes électromagnétiques d'une première plage de longueurs d'ondes, se situant de préférence dans l'infrarouge,
un second émetteur pour l'émission d'ondes électromagnétiques d'une seconde plage de longueurs d'ondes, se situant de préférence dans la zone des micro-ondes,
un premier récepteur pour la réception d'ondes électromagnétiques de la première plage de longueurs d'ondes, située de préférence dans l'infrarouge, et
un second récepteur pour la réception d'ondes électromagnétiques de la seconde plage de longueurs d'ondes, située de préférence dans la zone des micro-ondes.

21. Dispositif selon l'une des revendications 17 à 20,
l'appareil de réglage (43) présentant :
un appareil de comparaison pour la comparaison du signal reçu du dispositif d'analyse (42) avec un signal mémorisé dans une mémoire, qui correspond à une proportion souhaitée d'un composant dans le boudin de fibres (24) et
un appareil de régénération de signal de commande destiné à générer un signal de commande (3a, 10e, 10f, 33a) en fonction d'un écart, déterminé par l'appareil de comparaison, du signal reçu (37a, 38a, 38b) par rapport au signal mémorisé et à délivrer le signal de commande (3a, 10e, 10f, 33a) à au moins un moyen de commande (3, 10, 12) destiné à recevoir le signal de commande (3a, 10e, 10f, 33a) et à influer sur la proportion de l'un des trois composants dans le sens d'un réglage de cette proportion dans le boudin de fibres (24).

22. Dispositif selon la revendication 21,
l'un des composants étant de la filasse pour filtre (4) sèche, appropriée pour la fabrication de filtres et
le moyen de commande (3, 10, 12) comprenant un dispositif d'étirage (3) pour l'étirage de la filasse pour filtre (4) avant le regroupement pour former le boudin de fibres, lequel dispositif d'étirage (3) commande la proportion de la filasse pour filtre (4) dans le courant de fibres (24) par un étirage d'intensité différente de la filasse pour filtre (4) en fonction du signal de commande reçu (3).

23. Dispositif selon la revendication 22,
un dispositif de pré-étirage (13) étant prévu pour le non rétrécissement de la filasse pour filtre (4) en amont du dispositif d'étirage dans le sens de déplacement de la filasse pour filtre (4).

24. Dispositif selon l'une des revendications 21 à 23,
le moyen de commande (3, 10, 12) comprenant un dispositif de climatisation (10) le long de la trajectoire de déplacement du matériau fibreux (4) pour la climatisation du matériau fibreux(4), le dispositif de climatisation contrôlant la proportion d'un composant eau dans le matériau fibreux (4) par la climatisation du matériau fibreux (4) en fonction du signal de commande reçu (10e, 10f).

25. Dispositif selon la revendication 24,
le dispositif de climatisation comprenant une chambre climatisée (10), par laquelle passe la trajectoire de déplacement du matériau fibreux (4), de l'air humide et/ou sec pouvant être insufflé dans la chambre climatisée (10) dans une quantité contrôlable pour la climatisation du matériau fibreux (4) en fonction du signal de commande reçu (10e, 10f).

26. Dispositif selon l'une des revendications 24 ou 25,
le dispositif de climatisation présentant un atomiseur à ultrasons pour la génération d'un brouillard de fines gouttelettes d'eau dans le dispositif de climatisation (10) et/ou un chauffage par rayonnement pour le réchauffement du matériau fibreux (4).

27. Dispositif selon l'une des revendications 21 à 26,
le moyen de commande (3, 10, 12) présentant un dispositif d'application (12) pour l'application d'un agent amollissant approprié pour la fabrication de filtres sur le matériau fibreux (4), la proportion du composant agent amollissant dans le boudin de fibres (24) pouvant être contrôlée par la commande du dosage de l'agent amollissant à l'aide du dispositif d'application(12) en fonction du signal de commande reçu (33a).
